# EUROPÄISCHE PATENTSCHRIFT

(11) **EP 3 283 371 B1**
(45) Veröffentlichungstag und Bekanntmachung des Hinweises auf die Patenterteilung: **17.02.2021**
(21) Anmeldenummer: 16715834.4
(22) Anmeldetag: 07.04.2016
(51) Int. Cl.: B64D 11/00, B64D 11/06, B60N 2/02, H04N 21/00

(54) **SYSTEM ZUR STEUERUNG EINER FLUGGASTSITZEINHEIT**
SYSTEM FOR CONTROLLING AN AIRCRAFT PASSENGER SEAT UNIT
SYSTÈME POUR COMMANDER UNE UNITÉ DE SIÈGE PASSAGER D'AÉRONEF

(30) Priorität: 13.04.2015 DE 102015105617
(43) Veröffentlichungstag der Anmeldung: 21.02.2018
(73) Patentinhaber: Recaro Aircraft Seating GmbH & Co. KG, 74523 Schwäbisch Hall (DE)
(72) Erfinder: STRECKERT, Michael, 74523 Schwäbisch Hall (DE); MEHMEL, Jürgen, 74523 Schwäbisch Hall (DE); GERNGROSS, Michael, 74545 Michelfeld (DE); LAUBENBERGER, Jörg, 71540 Murrhardt (DE); HOPPE, Michael, 74523 Schwäbisch Hall (DE)
(74) Vertreter: Daub, Thomas
(86) Internationale Anmeldenummer: PCT/EP2016/057550
(87) Internationale Veröffentlichungsnummer: WO 2016/165998

(56) Entgegenhaltungen:
- DE-A1-102011 118 754
- DE-A1-102012 024 641
- DE-A1-102013 203 226
- US-A1- 2014 282 684
- US-A1- 2015 017 915

## Beschreibung

### Stand der Technik

Die Erfindung betrifft ein System nach dem Oberbegriff des Patentanspruchs 1.

Es ist bereits ein System aus einer Flugzeugvorrichtung, die wenigstens eine Steuer- und/oder Regeleinheit umfasst, die zur Steuerung einer Fluggastsitzeinheit vorgesehen ist, und einem PED, auf dem wenigstens ein Betriebsprogramm hinterlegt ist, vorgeschlagen worden, wie in der US2015017915 erläutert. Dort findet die Bedienung der Fluggastsitzeinheit ausschließlich über das PED statt.

Die Aufgabe der Erfindung besteht insbesondere darin, eine gattungsgemäße Vorrichtung mit verbesserten Eigenschaften hinsichtlich eines Komforts und einer Bedienung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können. Eine entsprechende Verwendung ist Gegenstand des Anspruchs 16.

### Vorteile der Erfindung

Die Erfindung geht aus von einem System aus einer Flugzeugvorrichtung, die wenigstens eine Steuer- und/oder Regeleinheit umfasst, die zur Steuerung einer Fluggastsitzeinheit vorgesehen ist, und einem PED, auf dem wenigstens ein Betriebsprogramm hinterlegt ist.

Erfindungsgemäß ist die Steuer- und/oder Regeleinheit dazu vorgesehen, Steuersignale von dem PED zur Steuerung der Fluggastsitzeinheit zu empfangen.

Unter einer "Flugzeugvorrichtung" soll dabei insbesondere ein Teil, insbesondere ein elektrischer und/oder elektronischer Teil eines Flugzeugs, insbesondere einer Flugzeugkabine, verstanden werden. Unter einer "Steuer- und/oder Regeleinheit" soll insbesondere eine Einheit mit zumindest einem Steuergerät verstanden werden. Unter einem "Steuergerät" soll insbesondere eine Einheit mit einer Prozessoreinheit und mit einer Speichereinheit sowie mit einem in der Speichereinheit gespeicherten Betriebsprogramm verstanden werden. Grundsätzlich kann die Steuer- und/oder Regeleinheit mehrere untereinander verbundene Steuergeräte aufweisen, die vorzugsweise dazu vorgesehen sind, über ein Bus-System, wie insbesondere ein CAN-Bus-System, miteinander zu kommunizieren. Unter einer "Fluggastsitzeinheit" soll dabei insbesondere eine Einheit verstanden werden, die wenigstens einen Fluggastsitz und dessen Peripherie umfasst. Dabei umfasst eine Fluggastsitzeinheit vorzugsweise ein Shellmodul, das den Fluggastsitz umgibt und Anbauteile der Fluggastsitzeinheit, wie Ablage- und Verstaumöglichkeiten, sowie beispielsweise ein Entertainmentmodul aufweist. Unter einem "PED" soll dabei insbesondere ein mobiles elektronisches Gerät, wie insbesondere ein Tablet-PC, ein Smartphone, ein E-Book-Reader, eine Smartwatch, eine Datenbrille oder ein anderes, dem Fachmann als sinnvoll erscheinendes mobiles elektronisches Gerät, verstanden werden. Dabei weist das PED einen internen Speicher auf, auf dem ein Betriebssystem hinterlegt ist, über das das PED gesteuert und bedient werden kann, und so eine Schnittstelle zwischen einer Hardware des PEDs und der auf dem PED hinterlegten Anwendersoftware. Das PED weist vorzugsweise eine Ausgabeeinheit, wie insbesondere einen Bildschirm, sowie eine Eingabeeinheit auf, über die Eingaben getätigt werden können, wobei die Eingabeeinheit und die Ausgabeeinheit vorzugsweise einstückig als ein Touchscreen ausgebildet sind. Unter einem "Betriebsprogramm" soll dabei insbesondere eine Anwendungssoftware verstanden werden, die auf dem PED hinterlegt ist und auf dem PED mittels dessen Betriebssystems ausführbar ist. Das Betriebsprogramm ist dabei vorzugsweise als eine Application ausgebildet, die aus einem elektronischen Store auf das PED heruntergeladen und auf dem PED installiert werden kann. Darunter, dass ein "Betriebsprogramm auf dem PED hinterlegt ist", soll dabei insbesondere verstanden werden, dass das Betriebsprogramm zumindest teilweise auf einem internen Speicher des PEDs gespeichert und installiert ist und dass das Betriebsprogramm auf dem PED ausführbar ist. Unter einem "Steuersignal" soll dabei insbesondere ein elektrisches und/oder elektronisches Signal verstanden werden, das dazu vorgesehen ist, Informationen zu tragen, die dazu vorgesehen sind, ein zu bedienendes Element entsprechend anzusteuern. Unter "Steuersignale zur Steuerung empfangen" soll dabei insbesondere verstanden werden, dass die Steuer- und/oder Regeleinheit entsprechende Steuersignale durch einen Dateneingang empfängt, diese dann verarbeitet und in entsprechende Ausgangssignale für ein zu steuerndes Element umwandelt und diese Ausgangssignale dann dem zu steuernden Element bereitstellt. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann die Fluggastsitzeinheit besonders einfach und vorteilhaft mit einem PED eines Passagiers, welcher mit dem Betriebsprogramm ausgestattet ist, bedient werden. Dadurch kann insbesondere ein Komfort für einen Passagier erhöht werden.

Weiter wird in einer bevorzugten Ausgestaltungsform vorgeschlagen, dass die Flugzeugvorrichtung wenigstens ein Kommunikationsmodul umfasst, über das das PED mit der Flugzeugvorrichtung drahtlos koppelbar ist. Unter einem "Kommunikationsmodul" soll dabei insbesondere ein Modul verstanden werden, das zur elektrischen und/oder elektronischen Kommunikation von elektrischen und/oder elektronischen Bauteilen der Flugzeugvorrichtung vorgesehen ist. Dabei umfasst das Kommunikationsmodul der Flugzeugvorrichtung vorzugsweise mehradrige elektrische Leitungen, wie insbesondere Ethernetkabel, die verschiedene Teile der Flugzeugvorrichtung, wie insbesondere Fluggastsitzeinheiten, mit einer zentralen Steuer- und/oder Regeleinheit eines Flugzeugs verbinden. Weiter weist das Kommunikationsmodul der Flugzeugvorrichtung ein WLAN-Modul auf, das dazu vorgesehen ist, ein Funknetzwerk bereitzustellen, über das insbesondere PEDs mit dem Kommunikationsmodul verbunden werden können und dadurch mit diesem kommunizieren können. Unter "drahtlos koppelbar" soll dabei insbesondere über eine Funkverbindung miteinander verbunden verstanden werden, wobei über die Funkverbindung dabei Daten ausgetauscht werden können. Dadurch kann das PED besonders einfach mit der Flugzeugvorrichtung gekoppelt werden.

Zudem wird in einer bevorzugten Ausgestaltungsform vorgeschlagen, dass über das Kommunikationsmodul mehrere PEDs drahtlos mit der Flugzeugvorrichtung gekoppelt werden können, um unterschiedliche Fluggastsitzeinheiten anzusteuern. Dadurch kann vorteilhaft für jeden Fluggastsitz ein separates PED zur Steuerung mit der Flugzeugvorrichtung verbunden werden.

Weiterhin wird in einer bevorzugten Ausgestaltungsform vorgeschlagen, dass das Betriebsprogramm des PEDs dazu vorgesehen ist, über das Kommunikationsmodul mit lediglich einer Fluggastsitzeinheit zu kommunizieren. Unter "lediglich mit einer Fluggastsitzeinheit zu kommunizieren", soll dabei insbesondere verstanden werden, dass das Betriebsprogramm zu einem Zeitpunkt lediglich mit einer Fluggastsitzeinheit, insbesondere mit einer Steuer- und/oder Regeleinheit der Fluggastsitzeinheit, kommuniziert. Dabei kann das PED nach einer Trennung von der einen Fluggastsitzeinheit über das Kommunikationsmodul mit einer anderen Fluggastsitzeinheit verbunden werden und dann lediglich mit dieser kommunizieren. Dadurch kann vorteilhaft sichergestellt werden, dass eine Fluggastsitzeinheit lediglich von einem PED steuerbar ist.

Es wird weiter in einer bevorzugten Ausgestaltungsform vorgeschlagen, dass das Betriebsprogramm des PEDs dazu vorgesehen ist, durch einen Pairingvorgang eindeutig einer einzelnen Fluggastsitzeinheit zugeordnet zu werden. Unter einem "Pairingvorgang" soll dabei insbesondere ein Vorgang verstanden werden, bei welchem dem Betriebsprogramm auf dem PED exakt eine Fluggastsitzeinheit zugeordnet wird, damit das Betriebsprogramm mit genau dieser Fluggastsitzeinheit zur Steuerung gekoppelt werden kann. Bei dem Pairingvorgang wird dabei dem Betriebsprogramm eine eindeutige Identifikation der Fluggastsitzeinheit übermittelt, sodass das Betriebsprogramm über das Kommunikationsmodul der Flugzeugvorrichtung die entsprechend richtige Fluggastsitzeinheit ansteuern kann. Dadurch kann vorteilhaft erreicht werden, dass auf einfache und komfortable Weise genau die gewünschte Fluggastsitzeinheit mittels des Betriebsprogramms des PEDs gesteuert werden kann.

Des Weiteren wird in einer bevorzugten Ausgestaltungsform vorgeschlagen, dass das PED bei dem Pairingvorgang dazu vorgesehen ist, einen durch die Fluggastsitzeinheit bereitgestellten Pairingcode zu verarbeiten und ein entsprechendes Signal an die Kommunikationseinheit der Flugzeugvorrichtung abzugeben. Unter einem "Pairingcode" soll dabei insbesondere ein durch das PED mittels einer Eingabeeinheit aufnehmbarer Code verstanden werden, der durch eine entsprechende Auswertung eindeutige Informationen beinhaltet. Dabei ist der Pairingcode vorzugsweise als ein visueller Code ausgebildet, kann aber grundsätzlich auch als ein akustischer Code oder ein Code aus elektro-magnetischen Wellen ausgebildet sein. Der Pairingcode ist dabei vorzugsweise als QR-Code ausgebildet. Grundsätzlich ist es auch denkbar, dass der Pairingcode als Strichcode, als Code aus Buchstaben, Zahlen und sonstigen Zeichen oder als ein anderer, dem Fachmann als sinnvoll erscheinender optisch erfassbarer Code ausgebildet ist. Zur Erfassung des Pairingcodes weist das PED eine Eingabeeinheit auf, die vorzugsweise als eine Kamera ausgebildet ist. Grundsätzlich ist es auch denkbar, dass die Eingabeeinheit als eine Einheit zur manuellen Eingabe des Codes ausgebildet ist, wie beispielsweise als eine Tastatur oder ein Touchscreen. Grundsätzlich ist es auch denkbar, dass der Pairingcode als ein digitaler Code ausgebildet ist, der über eine Nahfeldkommunikation (NFC) direkt zwischen dem PED und der Fluggastsitzeinheit übertragen wird. Dabei würden die Fluggastsitzeinheit sowie das PED jeweils ein NFC-Modul aufweisen, wobei die NFC-Module jeweils drahtlos miteinander kommunizieren. Dabei wäre das NFC-Modul der Fluggastsitzeinheit vorzugsweise in einem PED-Halter angeordnet. Unter "verarbeiten" soll dabei insbesondere verstanden werden, dass das PED Informationen, die in dem Pairingcode verschlüsselt sind, durch eine entsprechende Entschlüsselung ermittelt. Unter "bereitstellen" soll dabei insbesondere verstanden werden, dass der Pairingcode an einer für einen Passagier vorzugsweise einfach erreichbaren Stelle der Fluggastsitzeinheit angezeigt und/oder wiedergegeben wird. Dabei ist es denkbar, dass der Pairingcode permanent an der Fluggastsitzeinheit angezeigt wird, wie beispielsweise durch einen an der Fluggastsitzeinheit angebrachten Aufdruck, oder temporär über ein Anzeigemittel an der Fluggastsitzeinheit angezeigt und/oder wiedergegeben wird. Unter einem "entsprechenden Signal" soll in diesem Zusammenhang ein Signal verstanden werden, durch das die Kommunikationseinheit der Flugzeugvorrichtung eindeutig ermitteln kann, an welche Fluggastsitzeinheit die Signale des Betriebsprogramms des PEDs weitergeleitet werden müssen. Dadurch kann ein Pairingvorgang besonders einfach durchgeführt werden.

Außerdem wird in einer bevorzugten Ausgestaltungsform vorgeschlagen, dass das System wenigstens eine Fluggastsitzeinheit aufweist, die wenigstens ein Anzeigeelement aufweist, das dazu vorgesehen ist, den Pairingcode für den Pairingvorgang bereitzustellen. Unter einem "Anzeigeelement" soll dabei insbesondere ein Element verstanden werden, das den Pairingcode visuell und/oder akustisch anzeigen und/oder wiedergeben kann. Ein Anzeigeelement kann dabei als ein permanent und unveränderlich an der Fluggastsitzeinheit angebrachtes Anzeigemittel ausgebildet sein, wie beispielswese als ein Aufkleber oder ein Aufdruck. Vorzugsweise ist das Anzeigeelement als ein Display ausgebildet, das für einen Passagier einfach sichtbar an der Fluggastsitzeinheit angeordnet ist. Über das als Display ausgebildete Anzeigeelement kann der Pairingcode, der von der Steuer- und/oder Regeleinheit bereitgestellt wird, für jeden Pairingvorgang neu berechnet und ausgegeben werden. Dabei ist das Anzeigeelement, über das der Pairingcode ausgegeben wird, vorzugsweise einstückig mit einem Anzeigeelement eines Entertainmentmoduls der Fluggastsitzvorrichtung ausgebildet. Dadurch kann der Pairingcode für den Passagier besonders einfach bereitgestellt werden.

Weiter wird in einer bevorzugten Ausgestaltungsform vorgeschlagen, dass der Pairingcode zumindest einen Parameter umfasst, der für eine Identifizierung der entsprechenden Fluggastsitzeinheit vorgesehen ist. Unter einem "Parameter" soll dabei insbesondere ein in den Pairingcode verschlüsselt eingebrachtes Informationspaket verstanden werden, das durch Entschlüsseln des Pairingcodes von dem Betriebsprogramm des PEDs genutzt werden kann. Unter einem "Parameter zur Identifizierung der Fluggastsitzeinheit" soll dabei insbesondere ein Informationspaket verstanden werden, das eindeutig einer Fluggastsitzeinheit zugeordnet werden kann, wie beispielsweise eine ID der Fluggastsitzeinheit, die der Fluggastsitzeinheit durch das Kommunikationsmodul der Flugzeugvorrichtung in dem Netzwerk des Flugzeugs zugeordnet ist, oder eine Sitznummer des entsprechenden Fluggastsitzes in dem Flugzeug. Dadurch kann eine schnelle und eindeutige Identifizierung der entsprechenden Fluggastsitzeinheit durch den Pairingcode erfolgen.

Zudem wird in einer bevorzugten Ausgestaltungsform vorgeschlagen, dass der Pairingcode zumindest einen weiteren Parameter umfasst, der dazu vorgesehen ist, eine Ausstattung der Fluggastsitzeinheit wiederzugeben. Unter einem "Parameter, der die Ausstattung der Fluggastsitzeinheit wiedergibt", soll dabei insbesondere ein Informationspaket verstanden werden, durch dessen Verarbeitung das Betriebsprogramm eindeutig ermitteln kann, welche bedienbaren Module die Fluggastsitzeinheit aufweist, wie insbesondere ein Aktuatormodul, ein Lichtmodul, ein Entertainmentmodul oder ein Komfortmodul. Dadurch kann dem Betriebsprogramm vorteilhaft übermittelt werden, welche Ausstattung eine entsprechende Fluggastsitzeinheit aufweist, sodass das Betriebsprogramm automatisch entsprechende Einstellmöglichkeiten für die Fluggastsitzeinheit darstellen oder ausblenden kann.

Weiterhin wird in einer bevorzugten Ausgestaltungsform vorgeschlagen, dass die Fluggastsitzeinheit wenigstens ein Bedienelement umfasst, das zur Erzeugung des Pairingcodes betätigt werden muss. Unter einem "Bedienelement" soll dabei insbesondere ein Element verstanden werden, das von einem Passagier manuell betätigbar ist. Durch Betätigung des Bedienelements wird durch die Steuer- und/oder Regeleinheit ein Pairingcode generiert und auf dem entsprechenden Anzeigeelement für den Passagier angezeigt. Das Bedienelement kann dabei als ein separates Bedienelement, wie beispielsweise als ein Druckknopf, ausgebildet sein, oder vorzugsweise als eine Schaltfläche auf einem als Touchscreen ausgebildeten Anzeigeelement eines Entertainmentsystems. Dadurch kann der Pairingcode vorteilhaft dann angezeigt werden, wenn ein Passagier einen Pairingvorgang vornehmen will.

Es wird weiter in einer bevorzugten Ausgestaltungsform vorgeschlagen, dass das PED und/oder die Flugzeugvorrichtung dazu vorgesehen ist, zwischen dem PED und der einen zu bedienenden Fluggastsitzeinheit eine verschlüsselte Verbindung herzustellen. Unter einer "verschlüsselten Verbindung" soll dabei insbesondere eine sichere Verbindung verstanden werden, die eine größtmögliche Sicherheit bietet, dass Daten, die zwischen dem PED und der Flugzeugvorrichtung ausgetauscht werden, nicht von Dritten eingesehen und/oder manipuliert werden können. Dadurch kann vorteilhaft verhindert werden, dass Dritte sich in eine Kommunikation zwischen dem PED und der Flugzeugvorrichtung einbinden.

Des Weiteren wird vorgeschlagen, dass das Betriebsprogramm des PEDs wenigstens dazu vorgesehen ist, eine Lichtkontrolleinheit der entsprechenden Fluggastsitzeinheit anzusteuern. Unter einer "Lichtkontrolleinheit" soll dabei insbesondere eine Kontrolleinheit verstanden werden, die dazu vorgesehen ist, ein Lichtmodul der Fluggastsitzeinheit anzusteuern. Die Lichtkontrolleinheit ist dabei Teil der Steuer- und/oder Regeleinheit der Fluggastsitzeinheit. Dadurch kann über das Betriebsprogramm vorteilhaft eine Beleuchtung der Fluggastsitzeinheit eingestellt werden.

Außerdem wird in einer bevorzugten Ausgestaltungsform vorgeschlagen, dass das Betriebsprogramm des PEDs wenigstens dazu vorgesehen ist, eine Sitzpositionskontrolleinheit der entsprechenden Fluggastsitzeinheit anzusteuern. Unter einer "Sitzpositionskontrolleinheit" soll dabei insbesondere eine Kontrolleinheit verstanden werden, die dazu vorgesehen ist, ein Aktuatormodul eines Fluggastsitzes der Fluggastsitzeinheit anzusteuern. Die Sitzpositionskontrolleinheit ist dabei Teil der Steuer- und/oder Regeleinheit der Fluggastsitzeinheit. Dadurch kann über das Betriebsprogramm vorteilhaft eine Verstellung des Fluggastsitzes der Fluggastsitzeinheit erfolgen.

Weiter wird vorgeschlagen, dass das Betriebsprogramm des PEDs wenigstens dazu vorgesehen ist, eine Maintenance-Funktion aufzuweisen, die dazu vorgesehen ist, wenigstens einen maintenance-relevanten Parameter aus der Fluggastsitzeinheit auszulesen. Unter einer "Maintenance-Funktion" soll dabei insbesondere eine Bedieneroberfläche verstanden werden, die insbesondere zur Wartung von Fluggastsitzeinheiten in einer Flugzeugkabine vorgesehen ist. Die Maintenance-Funktion ist dabei in einem speziellen, lediglich für entsprechend autorisierte Personen vorgesehenen Betriebsprogramm vorgesehen. Unter einem "maintenance-relevanten Parameter" soll dabei insbesondere ein Parameter verstanden werden, der bei einem Maintenance-Vorgang regelmäßig ausgelesen und erfasst werden muss, wie beispielsweise eine Seriennummer der Fluggastsitzeinheit, ein Status der verschiedenen Module der Fluggastsitzeinheit oder ein Energieverbrauch der Fluggastsitzeinheit. Dadurch kann vorteilhaft ein Tool bereitgestellt werden, das einen Maintenance-Vorgang von Fluggastsitzeinheiten vereinfacht.

Zudem wird in einer bevorzugten Ausgestaltungsform vorgeschlagen, dass das Betriebsprogramm des PEDs wenigstens ein Bediencluster bereitstellt. Unter einem "Bediencluster" soll dabei insbesondere eine in dem Betriebsprogramm dargestellte Schaltfläche verstanden werden, durch deren Betätigung durch einen Passagier ein Steuersignal an die entsprechende Fluggastsitzeinheit ausgegeben wird, das wenigstens eine, vorzugsweise mehrere Betriebsparameter der Fluggastsitzeinheit verstellt. Dadurch kann vorteilhaft eine einfache Bediendung mittels des Bedienprogramms erreicht werden.

Weiterhin wird in einer bevorzugten Ausgestaltungsform vorgeschlagen, dass das wenigstens eine Bediencluster mehrere Betriebsparameter der Fluggastsitzeinheit umfasst. Unter einem "Betriebsparameter" soll dabei insbesondere ein Parameter verstanden werden, der eine definierte Einstellung eines einzustellenden Moduls der Fluggastsitzeinheit darstellt. Dabei kann ein Betriebsparameter eine Sitzposition des Fluggastsitzes, eine definierte Beleuchtungseinstellung des Lichtmoduls oder eine bestimmte Einstellung des Entertainmentsystems beinhalten. Dadurch können vorteilhaft durch Betätigung eines Bedienclusters mehrere Einstellungen der Sitzeinheit vorgenommen werden und dadurch verschiedene Grundstellungen der Fluggastsitzeinheit einfach und schnell von einem Passagier ausgewählt werden.

Es wird weiter in einer bevorzugten Ausgestaltungsform vorgeschlagen, dass das Betriebsprogramm des PEDs dazu vorgesehen ist, favorisierte Einstellungen eines Benutzers für eine Fluggastsitzeinheit zu hinterlegen. Unter "favorisierte Einstellungen hinterlegen" soll dabei insbesondere verstanden werden, dass ein Passagier persönlich favorisierte Einstellungen in einem Bediencluster in dem Betriebsprogramm hinterlegen kann, wobei bei Betätigung des entsprechenden Bedienclusters die Fluggastsitzeinheit auf die entsprechenden hinterlegten Einstellungen eingestellt wird. Dadurch kann ein Passagier die Fluggastsitzeinheit vorteilhaft schnell auf seine persönlichen Einstellungen einstellen.

Erfindungsgemäß umfasst die Fluggastsitzeinheit wenigstens ein Bedienmodul, das dazu vorgesehen ist, Steuersignale an die Steuer- und/oder Regeleinheit auszugeben, wobei die Steuersignale des Bedienmoduls Steuersignale eines mit der Fluggastsitzeinheit gekoppelten PEDs überschreiben. Unter einem "Bedienmodul" soll dabei insbesondere ein Modul verstanden werden, das mehrere Bedienelemente umfasst, die zur direkten Steuerung der Fluggastsitzeinheit vorgesehen sind und dazu gut für einen Passagier erreichbar an der Fluggastsitzeinheit angeordnet sind. Unter "überschreiben" soll dabei insbesondere verstanden werden, dass die Steuersignale des Bedienmoduls der Fluggastsitzeinheit eine höhere Priorität aufweisen, wodurch durch das Bedienmodul eingegebene Steuersignale der Fluggastsitzeinheit vorrangig von der Steuer- und/oder Regeleinheit verarbeitet werden und etwaige Steuersignale des Betriebsprogramms des PEDs, die in einem gleichen Zeitraum an die Steuer- und/oder Regeleinheit übermittelt werden, nicht ausgeführt werden. Verstellungen der Fluggastsitzeinheit, die durch Steuersignale des Betriebsprogramms des PEDs ausgelöst wurden und die durch Steuersignale des Bedienmoduls negiert werden, werden sofort beendet und die entsprechenden Steuersignale des Bedienmoduls werden von der Steuer- und/oder Regeleinheit umgesetzt. Dadurch kann vorteilhaft erreicht werden, dass eine Einstellung der Fluggastsitzeinheit im Endeffekt immer durch den auf dem entsprechenden Fluggastsitz sitzenden Passagier bestimmt werden kann.

Das erfindungsgemäße System soll hierbei nicht auf die oben beschriebene Anwendung und Ausführungsform beschränkt sein. Insbesondere kann das erfindungsgemäße System zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Systems mit einem Flugzeugmodul, mehreren Fluggastsitzeinheiten und PEDs,
- Fig. 2: eine schematische Darstellung einer Fluggastsitzeinheit und eines PEDs,
- Fig. 3: eine schematische Darstellung des erfindungsgemäßen Systems in einem Blockdiagramm und
- Fig. 4: eine schematische Darstellung des PEDs mit einer Bedienoberfläche eines Betriebsprogramms.

### Beschreibung des Ausführungsbeispiels

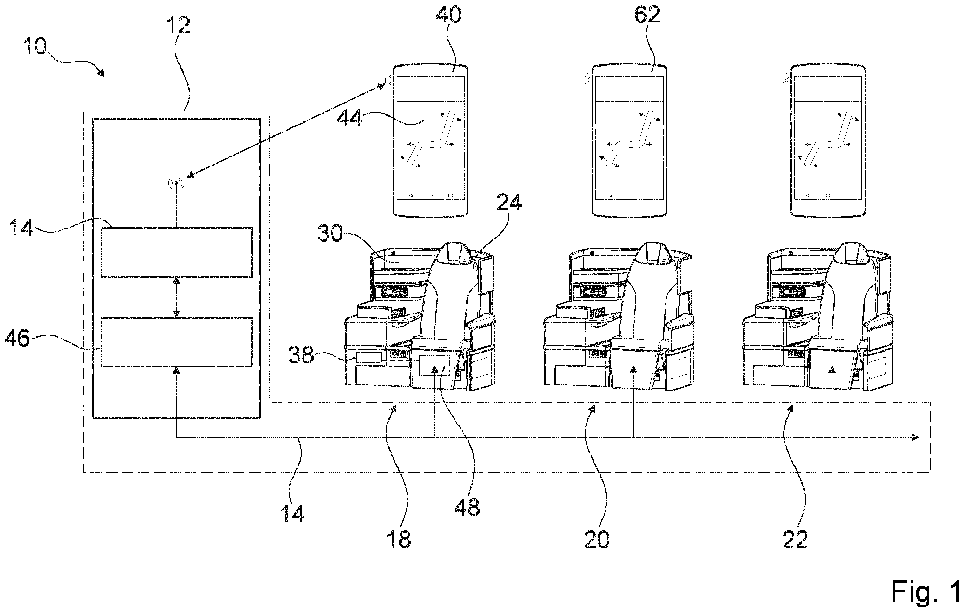

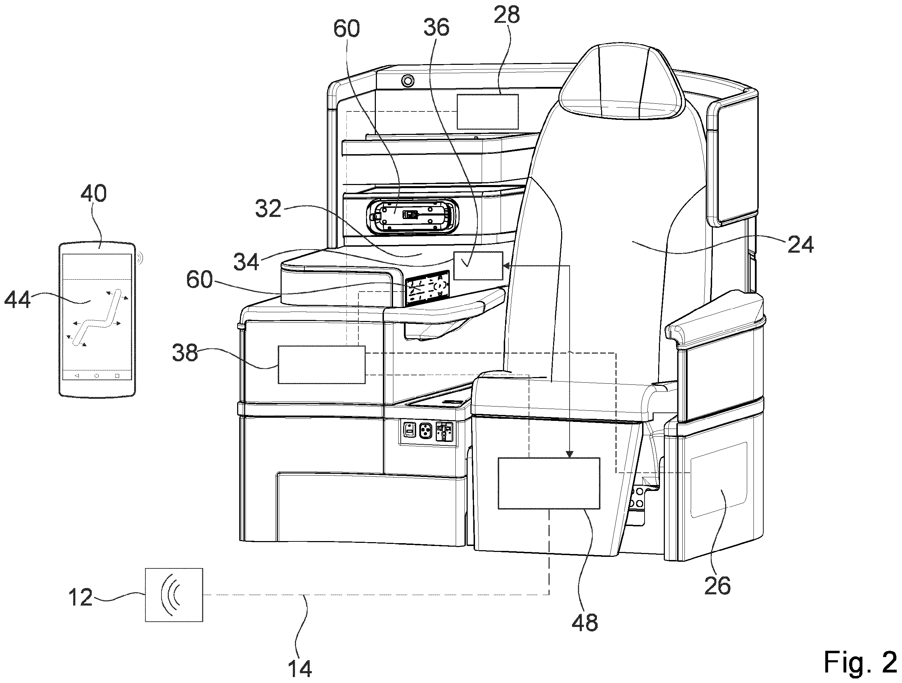

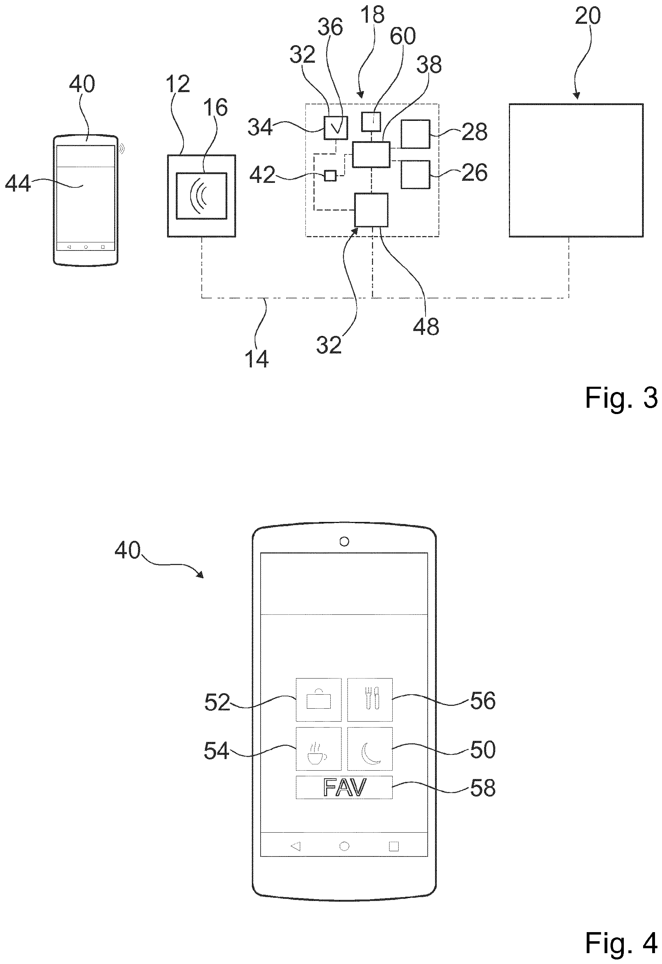

Die Figuren 1 bis 4 zeigen ein erfindungsgemäßes System. Das System umfasst eine Flugzeugvorrichtung 10. Figur 1 zeigt ein Teil eines Flugzeugs mit einer Flugzeugvorrichtung 10. Die Flugzeugvorrichtung 10 ist als ein Teil des Flugzeugs ausgebildet. Die Flugzeugvorrichtung 10 umfasst ein Kommunikationsmodul 12. Das Kommunikationsmodul 12 umfasst eine Verkabelung 14. Die Verkabelung 14 ist von Ethernetkabeln gebildet, die die verschiedenen, in der Flugzeugkabine anzusteuernden Elemente der Flugzeugvorrichtung 10 anbinden. Die Verkabelung 14 ist Teil eines In-Flight-Entertainment-Systems. Die Verkabelung 14 bildet einen IFE-Ethernet-Backbone aus. Das Kommunikationsmodul 12 umfasst eine Steuer- und Regeleinheit 46. Die Steuer- und Regeleinheit 46 ist ebenfalls Teil des In-Flight-Entertainment-Systems. Die Steuer- und Regeleinheit 46 ist dafür vorgesehen, ein Netzwerk in der Flugzeugvorrichtung 10 aufzubauen und entsprechende Informationen zu verarbeiten und an die entsprechenden Elemente weiterzuleiten. Das Kommunikationsmodul 12 umfasst eine Kommunikationseinheit 16. Die Kommunikationseinheit 16 ist dazu vorgesehen, ein drahtloses Netzwerk in der Flugzeugkabine bereitzustellen. Die Kommunikationseinheit 16 stellt ein WLAN-Netzwerk bereit. Dazu weist die Kommunikationseinheit 16 eine nicht näher dargestellte Steuereinheit und nicht näher dargestellte Antennen auf, über die das WLAN-Netzwerk in der Flugzeugkabine aufgebaut werden kann. Die Kommunikationseinheit 16 ist an die Verkabelung 14 angeschlossen. Dadurch sind alle in der Flugzeugkabine zu steuernden Elemente, die an die Verkabelung 14 angeschlossen sind, über die Kommunikationseinheit 16 zu erreichen.

Das System umfasst mehrere Fluggastsitzeinheiten 18, 20, 22. Beispielhaft sind in der Figur 1 drei Fluggastsitzeinheiten 18, 20, 22 gezeigt. In der Flugzeugkabine sind weitere, nicht näher dargestellte Fluggastsitzeinheiten angeordnet, die gleich ausgebildet sein können wie die gezeigten Fluggastsitzeinheiten 18, 20, 22. Grundsätzlich ist es auch denkbar, dass weitere Fluggastsitzeinheiten anders ausgebildet sind als die gezeigten Fluggastsitzeinheiten 18, 20, 22. Im Folgenden soll nur die Fluggastsitzeinheit 18 näher beschrieben werden. Die Fluggastsitzeinheit 18 umfasst einen Fluggastsitz 24. Der Fluggastsitz 24 ist dazu vorgesehen, dass ein Passagier, insbesondere während eines Flugs, auf ihm sitzen kann. Der Fluggastsitz 24 umfasst einen Sitzboden, eine schwenkbar zu dem Sitzboden verstellbare Rückenlehne sowie eine verschwenkbare Fußstütze. Der Fluggastsitz 24 weist eine aufrechte Sitzstellung, die als TTL-Stellung ausgebildet ist, und eine Liegestellung auf. Zwischen der aufrechten Sitzstellung und der Liegestellung kann der Fluggastsitz 24 stufenlos verstellt werden. Zur Verstellung in die verschiedenen Sitzstellungen werden der Sitzboden, die Rückenlehne und die Fußstütze des Fluggastsitzes 24 entsprechend zueinander verstellt. Zur Verstellung des Fluggastsitzes 24 weist der Fluggastsitz 24 ein Aktuatormodul 26 auf. Das Aktuatormodul 26 umfasst mehrere, einzeln ansteuerbare Aktuatoren, die an den Sitzboden, die Rückenlehne und die Fußstütze angebunden sind, um diese bewegen. Die Fluggastsitzeinheit 18 umfasst weiter ein Shellmodul 30. Das Shellmodul 30 umgibt den Fluggastsitz 24. Das Shellmodul 30 bildet einen Sitzplatzbereich der Fluggastsitzeinheit 18 aus, den ein auf dem Fluggastsitz 24 sitzender Passagier zur Verfügung hat. Das Shellmodul 30 bildet verschiedene Ablage- und Auflageelemente aus. Die Fluggastsitzeinheit 18 weist weiter ein Lichtmodul 28 auf. Das Lichtmodul 28 umfasst mehrere Lichtelemente. Die Lichtelemente sind dazu vorgesehen, den Sitzplatzbereich der Fluggastsitzeinheit 18 zu beleuchten. Dabei weist das Lichtmodul 28 wenigstens ein als Leselicht ausgebildetes Lichtelement auf. Das als Leselicht ausgebildete Lichtelement ist dazu vorgesehen, einen Teil des Sitzplatzbereichs direkt auszuleuchten, um dem Passagier ein Lesen und/oder Arbeiten zu ermöglichen. Weiter weist das Lichtmodul 28 wenigstens ein als Hintergrundlicht ausgebildetes Lichtelement aus. Das als Hintergrundlicht ausgebildete Lichtelement ist dazu vorgesehen, den Sitzplatzbereich indirekt auszuleuchten. Ferner weist das Lichtmodul 28 wenigstens ein als Ambientelicht ausgebildetes Lichtelement aus, das dazu vorgesehen ist, verschiedene Farben wiederzugeben. Die Fluggastsitzeinheit 18 umfasst weiter ein Komfortmodul. Das Komfortmodul umfasst eine Massageeinheit, die Massageelemente umfasst, die in den Fluggastsitz 24 integriert sind. Das Komfortmodul umfasst weiter eine Wärmeeinheit, die dazu vorgesehen ist, den Fluggastsitz 24 zu beheizen. Grundsätzlich ist es auch denkbar, dass die Fluggastsitzeinheit 18 und/oder der Fluggastsitz 24 weitere verstellbare Elemente aufweisen, wie beispielsweise eine Kopfstütze, eine Armlehne, ein Privacy-Divider oder andere, dem Fachmann als sinnvoll erscheinende verstellbare Elemente.

Die Fluggastsitzeinheit 18 weist ein Entertainmentmodul 32 auf. Das Entertainmentmodul 32 ist Teil des In-Flight-Entertainment-Systems. Das Entertainmentmodul 32 umfasst eine IFE-Steuer- und Regeleinheit 48. Die IFE-Steuer- und Regeleinheit 48 ist über die Verkabelung 14 an das Kommunikationsmodul 12 der Flugzeugvorrichtung 10 angebunden. Die IFE-Steuer- und Regeleinheit 48 bildet eine Verbindung des Kommunikationsmoduls 12 der Flugzeugvorrichtung 10 zu der Fluggastsitzeinheit 18 aus. Die Fluggastsitzeinheit 18 ist über die IFE-Steuer- und Regeleinheit 48 von der Flugzeugvorrichtung 10 ansteuerbar. Das Entertainmentmodul 32 weist ein Anzeigeelement 34 auf. Das Anzeigeelement 34 ist als ein Monitor ausgebildet. Dabei ist das Anzeigeelement 34 als ein Touchscreen ausgebildet. Das als Touchscreen ausgebildete Anzeigeelement 34 ist als ein Eingabeelement 36 ausgebildet. Das Anzeigeelement 34 ist dazu vorgesehen, dass auf ihm Medieninhalte zur Unterhaltung des Passagiers wiedergegeben werden können. Über das Anzeigeelement 34 können beispielsweise von dem In-Flight-Entertainment-System bereitgestellte Medieninhalte wiedergegeben werden.

Die Fluggastsitzeinheit 18 umfasst eine Steuer- und Regeleinheit 38. Die Steuer- und Regeleinheit 38 ist dazu vorgesehen, die Fluggastsitzeinheit 18 zu steuern. Dazu ist die Steuer- und Regeleinheit 38 elektronisch mit dem Aktuatormodul 26, dem Lichtmodul 28, dem Komfortmodul sowie der IFE-Steuer- und Regeleinheit 48 des Entertainmentmoduls 32 der Fluggastsitzeinheit 18 verbunden. Die Steuer- und Regeleinheit 38 der Fluggastsitzeinheit 18 ist über die IFE-Steuer- und Regeleinheit 48 an das Kommunikationsmodul 12 der Flugzeugvorrichtung 10 angebunden. Informationen, die zwischen dem Kommunikationsmodul 12, insbesondere der Steuer- und Regeleinheit 46 des Kommunikationsmoduls 12, und der Steuer- und Regeleinheit 38 der Fluggastsitzeinheit 18 ausgetauscht werden, werden über die IFE-Steuer- und Regeleinheit 48 übertragen. Die IFE-Steuer- und Regeleinheit 48 bildet ein Gateway zwischen der Steuer- und Regeleinheit 38 und dem Kommunikationsmodul 12 der Flugzeugvorrichtung 10 aus. Grundsätzlich wäre es auch denkbar, dass die Steuer- und Regeleinheit 38 direkt über die Verkabelung 14 an das Kommunikationsmodul 12 angeschlossen ist. Grundsätzlich wäre es ebenfalls denkbar, dass die Steuer- und Regeleinheit 38 der Fluggastsitzeinheit 18 und die IFE-Steuer- und Regeleinheit 48 einstückig miteinander ausgebildet sind. Die Steuer- und Regeleinheit 38 ist dazu vorgesehen, Steuersignale an die entsprechenden Module 26, 28, 32 auszugeben, um entsprechende Einstellungen an der Fluggastsitzeinheit 18 vorzunehmen. Die Fluggastsitzeinheit 18 umfasst ein Bedienmodul 60. Über das Bedienmodul 60 können die verschiedenen Funktionen der Fluggastsitzeinheit 18 über die Steuer- und Regeleinheit 38 gesteuert werden. Das Bedienmodul 60 weist dabei mehrere Bedienelemente auf, über die ein Passagier Eingaben machen kann. Grundsätzlich ist es auch denkbar, dass das Bedienmodul 60 lediglich ein Bedienelement, beispielsweise in Form eines Touchscreens, aufweist. Das Bedienmodul 60 gibt bei Eingabe durch den Bediener Steuersignale an die Steuer- und Regeleinheit 38 aus, die diese verarbeitet und dann entsprechende Steuersignale an die entsprechenden Module 26, 28, 32 ausgibt. So kann ein Passagier die Fluggastsitzeinheit 18 über das Bedienmodul 60 steuern.

Das erfindungsgemäße System umfasst ein PED 40. Das PED 40 ist als ein persönliches elektronisches Gerät ausgebildet. Das PED 40 ist für den Zweck der Beschreibung als ein Smartphone ausgebildet. Grundsätzlich ist es natürlich auch denkbar, dass das PED 40 als ein anderes, dem Fachmann als sinnvoll erscheinendes persönliches elektronisches Gerät ausgebildet ist. Das PED 40 ist dabei vorzugsweise als ein von dem Passagier mitgebrachtes elektronisches Gerät ausgebildet. Das PED 40 weist ein nicht näher dargestelltes Kommunikationsmodul auf, das dazu vorgesehen ist, das PED 40 drahtlos mit anderen Geräten zu verbinden. Das Kommunikationsmodul umfasst dabei verschiedene Kommunikationseinheiten, über die das PED 40 drahtlos kommunizieren kann. Das Kommunikationsmodul des PEDs 40 weist dabei eine WLAN-Kommunikationseinheit, eine Bluetooth-Kommunikationseinheit und eine NFC-Kommunikationseinheit auf. Die Kommunikationseinheiten sind dabei entsprechend den aus dem Stand der Technik bekannten Kommunikationseinheiten ausgebildet. Grundsätzlich ist es natürlich auch denkbar, dass das Kommunikationsmodul des PEDs 40 weitere, dem Fachmann als sinnvoll erscheinende Kommunikationseinheiten umfasst. Das PED 40 weist ein Touchscreenelement 44 auf, das als eine Anzeigeeinheit und ein Bedienelement ausgebildet ist. Über das Touchscreenelement 44 kann das PED 40 bedient werden und es können Informationen visuell dargestellt werden. Das PED 40 weist eine interne Speichereinheit auf. Auf der internen Speichereinheit ist ein Betriebsprogramm hinterlegt. Aus einem Betriebssystem des PEDs 40 heraus kann das Betriebsprogramm gestartet werden. Das Betriebsprogramm ist als eine Fluggastsitzbereich-Steuerungs-Applikation ausgebildet. Mittels des Betriebsprogramms kann der Passagier über das PED 40 verschiedene Funktionen der Fluggastsitzeinheit 18 steuern. Dazu ist die Steuer- und Regeleinheit 38 dazu vorgesehen, Steuersignale von dem PED 40 zur Steuerung der Fluggastsitzeinheit 18 zu empfangen. Die von der Steuer- und Regeleinheit 38 empfangenen Steuersignale, die von dem PED 40 ausgehen, welches von dem Passagier bedient wird, werden von der Steuer- und Regeleinheit 38 verarbeitet und die Steuer- und Regeleinheit 38 gibt entsprechende Steuersignale an die entsprechenden Module 26, 28, 32 der Fluggastsitzeinheit 18 aus.

Das PED 40 ist über die Kommunikationseinheit 16 der Flugzeugvorrichtung 10 mit der Flugzeugvorrichtung 10 koppelbar. Das PED 40 verbindet sich über seine WLAN Kommunikationseinheit mit dem von der Kommunikationseinheit 16 bereitgestellten WLAN-Netzwerk. Dabei geht das PED 40 eine gesicherte Verbindung mit dem von der Kommunikationseinheit 16 bereitgestellten WLAN-Netzwerk ein. Es sind dabei zeitgleich mehrere PEDs 40 über das von der Kommunikationseinheit 16 bereitgestellte WLAN-Netzwerk mit der Flugzeugvorrichtung 10 koppelbar. Über das WLAN-Netzwerk kann das Betriebsprogramm des PEDs 40 über das Kommunikationsmodul 12 mit den Fluggastsitzeinheiten 18, 20, 22 kommunizieren.

Dabei ist das Betriebsprogramm des PEDs 40 dazu vorgesehen, über das Kommunikationsmodul 12 lediglich mit einer der Fluggastsitzeinheiten 18, 20, 22 zu kommunizieren. Zeitgleich kann das Betriebsprogramm lediglich mit einer der Fluggastsitzeinheiten 18, 20, 22 gekoppelt werden. Zur eindeutigen Zuordnung des PEDs 40 zu der entsprechenden gewünschten Fluggastsitzeinheit 18 ist das Betriebsprogramm des PEDs 40 dazu vorgesehen, durch einen Pairingvorgang eindeutig einer einzelnen Fluggastsitzeinheit 18 zugeordnet zu werden. Für den Pairingvorgang ist die Fluggastsitzeinheit 18 dazu vorgesehen, einen Pairingcode bereitzustellen. Die Fluggastsitzeinheit 18 gibt den Pairingcode über das Anzeigeelement 34 des Entertainmentmoduls 32 aus. Der Pairingcode ist dabei als ein QR-Code ausgebildet. Grundsätzlich ist es auch denkbar, dass der Pairingcode als ein anderer Code, wie beispielsweise als ein Strichcode, ein Zahlencode oder ein Code aus Buchstaben und Zahlen, ausgebildet ist. Der Pairingcode ist zur eindeutigen Identifizierung der Fluggastsitzeinheit 18 vorgesehen, an der er angezeigt wird. Dazu umfasst der Pairingcode einen ersten Parameter, der die Fluggastsitzeinheit 18 eindeutig identifiziert. Der erste Parameter ist dabei als eine Fluggastsitzeinheits-ID ausgebildet. Der Pairingcode umfasst einen zweiten Parameter, der eine Ausstattung der Fluggastsitzeinheit 18 angibt. Dabei gibt der zweite Parameter im Falle der Fluggastsitzeinheit 18 an, welche Art Aktuatormodul 26, welche Art Lichtmodul 28, welche Art Komfortmodul und welche Art Entertainmentmodul 32 die Fluggastsitzeinheit 18 aufweist. Weiter weist der Pairingcode einen Verschlüsselungsparameter auf. Der Verschlüsselungsparameter umfasst einen öffentlichen Schlüsselparameter, der dem PED 40 für die Herstellung einer verschlüsselten Verbindung mit der Fluggastsitzeinheit 18 übermittelt werden muss. Weiter umfasst der Pairingcode eine zufällige Session-ID, sodass jeder neu erstellte Pairingcode anders ausgebildet ist als der davor von der Fluggastsitzeinheit 18 bereitgestellte Pairingcode. Zur Generierung des Pairingcodes umfasst die Fluggastsitzeinheit 18 ein Bedienelement 42. Durch Betätigen des Bedienelements 42 generiert die Steuer- und Regeleinheit 38 den Pairingcode und gibt ihn über das Anzeigeelement 34 aus. Das Bedienelement 42 ist dabei von dem als Touchscreen ausgebildeten Eingabeelement 36 des Entertainmentmoduls 32 ausgebildet. Grundsätzlich ist es auch denkbar, dass das Bedienelement 42 als ein separates Bedienelement, beispielsweise als ein in das Shellmodul 30 oder den Fluggastsitz 24 eingebrachter Druckknopf, ausgebildet ist.

Das PED 40 umfasst eine Eingabeeinheit, die als eine Kamera ausgebildet ist. Über die als Kamera ausgebildete Eingabeeinheit ist das Betriebsprogramm dazu vorgesehen, den Pairingcode der Fluggastsitzeinheit 18 aufzunehmen und zu verarbeiten. Das Betriebsprogramm nimmt über die Eingabeeinheit den Pairingcode auf und entschlüsselt die in dem Pairingcode enthaltenen Parameter. Mittels des über den Pairingcode ermittelten ersten Parameters zur Identifizierung der Fluggastsitzeinheit 18 und des Verschlüsselungsparameters baut das Betriebsprogramm über das Kommunikationsmodul 12 der Flugzeugvorrichtung 10 eine verschlüsselte Verbindung zu der Fluggastsitzeinheit 18, insbesondere zu der Steuer- und Regeleinheit 38 der Fluggastsitzeinheit 18, auf. Ist das Betriebsprogramm des PEDs 40 sicher mit der Fluggastsitzeinheit 18 gekoppelt, wird eine weitere Kopplung des Betriebsprogramms und der Fluggastsitzeinheit 18 unterbunden. So kann jeweils lediglich ein PED 40 mit einer der Fluggastsitzeinheiten 18, 20, 22 gekoppelt werden.

Das Betriebsprogramm des PEDs 40 umfasst eine Schaltfläche, die dazu vorgesehen ist, einen Pairingvorgang zu starten. Im Folgenden soll kurz beispielhaft ein Pairingvorgang beschrieben werden. Zum Starten des Pairingvorgangs betätigt der Passagier das Bedienelement 42. Ein von dem Bedienelement 42 ausgegebenes Signal wird von der Steuer- und Regeleinheit 38 verarbeitet, worauf diese einen Pairingcode generiert. Die Steuer- und Regeleinheit 38 übermittelt den Pairingcode an das Entertainmentmodul 32 und der Pairingcode wird auf dem Anzeigeelement 34 für den Passagier sichtbar wiedergegeben. Der Passagier betätigt auf seinem PED 40 die Schaltfläche des Betriebsprogramms, die zum Starten des Pairingvorgangs vorgesehen ist. Das Betriebsprogramm erfasst über die als Kamera ausgebildete Eingabeeinheit den Pairingcode und entschlüsselt die in dem Pairingcode enthaltenen Parameter. Das Betriebsprogramm sendet daraufhin ein entsprechendes Signal an das Kommunikationsmodul 12 der Flugzeugvorrichtung 10, die das Signal anhand des ersten Parameters zur Identifikation der Fluggastsitzeinheit 18 an die Fluggastsitzeinheit 18 übermittelt. Die Steuer- und Regeleinheit 38 der Fluggastsitzeinheit 18 verarbeitet das Signal und baut entsprechend dem Verschlüsselungsparameter, der von dem Betriebsprogramm gesendet wurde, eine verschlüsselte Verbindung mit dem Betriebsprogramm des PEDs 40 auf. Ist die verschlüsselte Verbindung zwischen dem Betriebsprogramm des PEDs 40 und der IFE-Steuer- und Regeleinheit 48 und damit auch mit der Steuer- und Regeleinheit 38 hergestellt, beendet die Steuer- und Regeleinheit 38 die Anzeige des Pairingcodes auf dem Anzeigeelement 34 des Entertainmentmoduls 32.

Sind das Betriebsprogramm des PEDs 40 und die IFE-Steuer- und Regeleinheit 48 mittels der verschlüsselten Verbindung miteinander gekoppelt, können Datensätze verschlüsselt zwischen dem Betriebsprogramm und der Steuer- und Regeleinheit 38 ausgetauscht werden. Eine Verbindung zwischen dem Betriebsprogramm des PEDs 40 und der Steuer- und Regeleinheit 38 ist dabei als optionierte, verschlüsselte End-to-End-Kommunikation mit optionalem Busprotokoll-Umsetzer ausgebildet. Durch die Verschlüsselung der Daten zwischen der Steuer- und Regeleinheit 46 des Kommunikationsmoduls 12 der Flugzeugvorrichtung 10 und der IFE-Steuer- und Regeleinheit 48 des Entertainmentmoduls 32 der Fluggastsitzeinheit 18 kann eine sichere Verbindung über die eigentlich ungesicherte Datenverbindung, welche die Verkabelung 14 des In-Flight-Entertainment-Systems bereitstellt, erfolgen. Dadurch kann zur Kommunikation zwischen dem Betriebsprogramm des PEDs 40 und der Steuer- und Regeleinheit 38 der Fluggastsitzeinheit 18 vorteilhaft eine in Flugzeugvorrichtungen 10 üblicherweise vorhandene Struktur, nämlich die des In-Flight-Entertainment-Systems einfach und vorteilhaft genutzt werden. Grundsätzlich wäre es auch denkbar, dass das Betriebsprogramm des PEDs 40 direkt mit der Steuer- und Regeleinheit 38 der Fluggastsitzeinheit 18 oder der IFE-Steuer- und Regeleinheit 48 gekoppelt ist. Dazu würde die Fluggastsitzeinheit 18 ein separates Kommunikationsmodul umfassen, welches als ein WLAN-Modul, ein Bluetooth-Modul, ein NFC-Modul oder ein anderes, dem Fachmann als sinnvoll erscheinendes, zur drahtlosen Übertragung vorgesehenes Modul ausgebildet ist. Dabei wäre zur direkten Verbindung des Betriebsprogramms des PEDs 40 mit der Fluggastsitzeinheit 18 trotzdem ein Pairingvorgang sinnvoll, der dem oben beschriebenen Pairingvorgang entsprechen könnte. T

Ist das Betriebsprogramm des PEDs 40 sicher mit der IFE-Steuer- und Regeleinheit 48 und damit mit der Steuer- und Regeleinheit 38 der Fluggastsitzeinheit 18 verbunden, kann die Fluggastsitzeinheit 18 über das Betriebsprogramm gesteuert werden. Über das Kommunikationsmodul 12 der Flugzeugvorrichtung 10 werden Steuersignale über die IFE-Steuer- und Regeleinheit 48 an die Steuer- und Regeleinheit 38 übermittelt, woraufhin die Steuer- und Regeleinheit 38 die entsprechenden Module 26, 28, 32 der Fluggastsitzvorrichtung 18 entsprechend ansteuert. Zur Sicherheit werden Steuersignale des mit der Fluggastsitzeinheit 18 gekoppelten PEDs 40 von Steuersignalen, die von dem Bedienmodul 60 der Fluggastsitzeinheit 18 an die Steuer- und Regeleinheit 38 übermittelt werden, überschrieben. Das Bedienmodul 60 stellt ein Hauptbedienelement der Fluggastsitzeinheit 18 dar und wird von der Steuer- und Regeleinheit 38 als dominant gegenüber dem Betriebsprogramm des PEDs 40 eingestuft, das ein sekundäres Bedienelement darstellt. Dadurch können mögliche Fehlfunktionen des PEDs 40 oder des auf ihm betriebenen Betriebsprogramms einfach durch den Passagier ausgeglichen werden, indem die Steuersignale des Betriebsprogramms von den Steuersignalen des Bedienmoduls 60 überschrieben werden. Im Folgenden sollen nun verschiedene Bedienmöglichkeiten und Ausgestaltungen des Betriebsprogramms beschrieben werden. Diese Erläuterungen sollen nicht abschließend verstanden werden.

Das Betriebsprogramm weist verschiedene Bedienoberflächen auf, die auf dem Touchscreenelement des PEDs 40 grafisch dargestellt werden können. Eine erste Bedienoberfläche ist als ein Hauptmenü ausgebildet. Dabei ist auf der ersten, als Hauptmenü ausgebildeten Bedienoberfläche in einem Zustand, in dem das Betriebsprogramm nicht mit einer Fluggastsitzeinheit 18, 20, 22 verbunden ist, die Schaltfläche, die dazu vorgesehen ist, einen Pairingvorgang zu starten, angezeigt. In einem mit einer Fluggastsitzeinheit 18, 20, 22 verbundenen Zustand bildet die erste Bedienoberfläche mehrere Untermenüschaltflächen aus, die durch Berühren des entsprechenden Bereichs auf dem Touchscreenelement 44 des PEDs 40 ausgewählt werden können.

Das Betriebsprogramm des PEDs 40 ist dazu vorgesehen, eine Lichtkontrolleinheit der entsprechenden Fluggastsitzeinheit 18 anzusteuern Die Lichtkontrolleinheit ist als Teil der Steuer- und Regeleinheit 38 ausgebildet. Grundsätzlich ist es auch denkbar, dass die Lichtkontrolleinheit als eigenständige Steuereinheit ausgebildet ist. Die Lichtkontrolleinheit ist dazu vorgesehen, das Lichtmodul 28 der Fluggastsitzeinheit 18 zu steuern. Über das Betriebsprogramm kann das Lichtmodul 28 der Fluggastsitzeinheit 18 angesteuert werden und so eine Beleuchtung innerhalb der Fluggastsitzeinheit 18 geregelt werden. Zur Steuerung des Lichtmoduls 28 der Fluggastsitzeinheit 18 weist das Betriebsprogramm eine Lichtsteuerungs-Bedienoberfläche auf, die vorzugsweise direkt über eine der Untermenüschaltflächen aus der als Hauptmenü ausgebildeten Bedienoberfläche ausgewählt werden kann. In der Lichtsteuerungs-Bedienoberfläche sind für Lichtelemente des Lichtmoduls 28, die über die Lichtkontrolleinheit regelbar sind, Schaltflächen bereitgestellt, über die die Lichtelemente jeweils ein- und ausgeschaltet, gedimmt und/oder in ihrer Farbe verändert werden können. Dazu bildet die Lichtsteuerungs-Bedienoberfläche virtuelle Schieberegler aus, mittels derer eine Helligkeit der Lichtelemente und/oder eine Farbe der Lichtelemente jeweils separat stufenlos einstellbar sind. Weiter weist die Lichtsteuerungs-Bedienoberfläche Schaltflächen auf, mit denen verschiedene Grundeinstellungen, wie diverse Grundfarben oder verschiedene voreingestellte Helligkeiten, direkt eingestellt werden können.

Das Betriebsprogramm des PEDs 40 ist dazu vorgesehen, eine Sitzpositionskontrolleinheit der entsprechenden Fluggastsitzeinheit 18, 20, 22 anzusteuern. Die Sitzpositionskontrolleinheit ist als Teil der Steuer- und Regeleinheit 38 ausgebildet. Grundsätzlich ist es auch denkbar, dass die Sitzpositionskontrolleinheit als eigenständige Steuereinheit ausgebildet ist. Die Sitzpositionskontrolleinheit ist dazu vorgesehen, das Aktuatormodul 26 des Fluggastsitzes 24 zu steuern. Über das Betriebsprogramm kann das Aktuatormodul 26 des Fluggastsitzes 24 angesteuert werden und so eine Verstellung der Sitzposition des Fluggastsitzes 24 vorgenommen werden. Zur Steuerung des Aktuatormoduls 26 des Fluggastsitzes 24 weist das Betriebsprogramm eine Sitzverstellungs-Bedienoberfläche auf, die vorzugsweise direkt über eine der Untermenüschaltflächen aus der als Hauptmenü ausgebildeten Bedienoberfläche ausgewählt werden kann. In der Sitzverstellungs-Bedienoberfläche sind für verstellbare Elemente des Fluggastsitzes 24, wie insbesondere Rückenlehne und Fußstütze, Schaltflächen bereitgestellt, über die die verstellbaren Elemente angesteuert werden können. Die Sitzverstellungs-Bedienoberfläche bildet ebenfalls eine Schaltfläche aus, über die der gesamte Fluggastsitz 24 stufenlos zwischen einer aufrechten TTL-Sitzstellung und der Liegestellung verstellt werden kann. Dabei ist es denkbar, dass die Sitzverstellungs-Bedienoberfläche einen virtuellen Schieberegler ausbildet, über den ein Passagier die Sitzposition stufenlos einstellen kann. Weiter ist es denkbar, dass der Passagier über ein Eingabefeld in der Sitzverstellungs-Bedienoberfläche spezielle Sitzwinkel eingeben kann. Zur schnellen Ausrichtung des Fluggastsitzes 24 in verschiedenen Grundpositionen, wie insbesondere der aufrechten Sitzstellung, der Liegestellung oder einer Komfortstellung, weist die Sitzverstellungs-Bedienoberfläche Schaltflächen auf, über die diese Sitzstellungen direkt eingestellt werden.

Das Betriebsprogramm des PEDs 40 ist dazu vorgesehen, eine Komfortkontrolleinheit und eine Entertainmentkontrolleinheit der entsprechenden Fluggastsitzeinheit 18 anzusteuern. Die Komfortkontrolleinheit und die Entertainmentkontrolleinheit sind jeweils als Teil der Steuer- und Regeleinheit 38 ausgebildet. Grundsätzlich ist es auch denkbar, dass die Komfortkontrolleinheit und die Entertainmentkontrolleinheit jeweils als eigenständige Steuereinheiten ausgebildet sind. Die Komfortkontrolleinheit ist dazu vorgesehen, das Komfortmodul des Fluggastsitzes 24 zu steuern. Die Entertainmentkontrolleinheit ist dazu vorgesehen, das Entertainmentmodul 32 der Fluggastsitzeinheit 18 zu steuern. Für die Ansteuerung der Komfortkontrolleinheit sowie der Entertainmentkontrolleinheit weist das Betriebsprogramm jeweils eigenständige Bedienoberflächen aus, die vorzugsweise jeweils direkt über eine der Untermenüschaltflächen aus der als Hauptmenü ausgebildeten Bedienoberfläche ausgewählt werden können. Die Bedienoberflächen weisen dabei wie die zuvor beschriebenen Bedienoberflächen jeweils Schaltflächen auf, über die die verschiedenen Funktionen des Komfortmoduls beziehungsweise des Entertainmentmoduls 32 ausgeführt werden können.

Das Betriebsprogramm des PEDs 40 weist eine Schnellbedienungs-Bedienoberfläche auf. Die Schnellbedienungs-Bedienoberfläche ist dabei vorzugsweise direkt über eine der Untermenüschaltflächen aus der als Hauptmenü ausgebildeten Bedienoberfläche auswählbar. Das Betriebsprogramm des PEDs 40 stellt mehrere Bediencluster 50, 52, 54, 56 bereit. Jedes der Bediencluster 50, 52, 54, 56 weist in der Schnellbedienungs-Bedienoberfläche jeweils eine Schaltfläche auf, über die das entsprechende Bediencluster 50, 52, 54, 56 ausgewählt werden kann. Jedes der Bediencluster 50, 52, 54, 56 umfasst mehrere Betriebsparameter. Jeder der Betriebsparameter ist dabei dazu vorgesehen, eine Funktion oder ein verstellbares Modul 26, 28, 32 der Fluggastsitzeinheit 18 einzustellen. Durch Auswahl eines Bedienclusters 50, 52, 54, 56 werden dabei zeitgleich mehrere Module 26, 28, 32 der Fluggastsitzeinheit 18 verstellt. Dabei ist ein erstes Bediencluster 50 als Schlaf-Bedienelement ausgebildet. Das erste Bediencluster 50 weist dabei beispielsweise einen ersten Betriebsparameter, der einer Liegeposition des Fluggastsitzes 24 entspricht, und einen zweiten Betriebsparameter auf, der die Beleuchtung der Fluggastsitzeinheit 18 über das Lichtmodul 28 auf ein Minimum einstellt oder die Beleuchtung komplett ausschaltet. Weitere Bediencluster 52, 54, 56 können beispielsweise als ein Arbeits-Bedienelement, als ein Komfort-Bedienelement oder als ein Ess-Bedienelement ausgebildet sein. Dabei werden durch Anwenden der verschiedenen Bediencluster 50, 52, 54, 56 jeweils mehrere Funktionen der Fluggastsitzeinheit 18 verstellt, wie insbesondere eine Sitzstellung des Fluggastsitzes 24 angepasst und eine Beleuchtung in der Fluggastsitzeinheit 18 angepasst. Dabei wird die Fluggastsitzeinheit 18 durch Betätigen des als Arbeitsbedienelements ausgebildeten Bedienclusters 52 in eine optimale, aufrechte Stellung zum Arbeiten gebracht und eine Beleuchtung der Fluggastsitzeinheit 18 wird optimal eingestellt. Durch Betätigen des als Ess-Bedienelements ausgebildeten Bedienclusters 56 wird die Fluggastsitzeinheit 18 in eine optimale Stellung zum Essen gefahren. Durch Betätigen des als Komfort-Bedienelements ausgebildeten Bedienclusters 54 wird die Fluggastsitzeinheit 18 in eine Komfortstellung gebracht.

Das Betriebsprogramm des PEDs 40 ist dazu vorgesehen, favorisierte Einstellungen eines Benutzers für eine Fluggastsitzeinheit 18 zu hinterlegen. Dabei kann der Benutzer verschiedene favorisierte Einstellungen, wie insbesondere eine Sitzstellung des Fluggastsitzes 24 und eine Beleuchtung in der Fluggastsitzeinheit 18 sowie beispielsweise eine Temperatur einer Sitzheizung, in einem Favoriten-Bediencluster 58 hinterlegen. Dieses Favoriten-Bediencluster 58 wird dabei ebenfalls in der Schnellbedienungs-Bedienoberfläche des Betriebsprogramms dargestellt. Dabei kann ein Passagier mindestens ein Favoriten-Bediencluster 58 in dem Betriebsprogramm des PEDs 40 hinterlegen. Grundsätzlich ist es auch denkbar, dass der Passagier mehrere solcher Favoriten-Bediencluster 58 in dem Betriebsprogramm des PEDs 40 hinterlegen kann.

Das PED 40 umfasst mehrere, nicht näher dargestellte Eingabemöglichkeiten und Sensoren, wie insbesondere ein Mikrofon, einen Neigungssensor, einen Beschleunigungssensor und einen Beleuchtungssensor. Das PED 40 kann weitere, dem Fachmann als sinnvoll erscheinende Eingabemöglichkeiten aufweisen. Dabei soll die oben angeführte Liste nicht abschließend sein. Das Betriebsprogramm des PEDs 40 weist eine Bedienfunktion auf, bei der über eine Eingabe des Bedieners, die über die oben genannten Eingabemöglichkeiten erfolgt, ein Steuersignal an die Steuer- und Regeleinheit 38 ausgegeben wird. Dabei ist es beispielsweise denkbar, zur Steuerung der Sitzpositionskontrolleinheit die Sensorsignale des Neigungssensors zu verwenden, um so durch Neigen des PEDs 40 eine Sitzeinstellung vorzunehmen. In einer weiteren Bedienfunktion kann das Betriebsprogramm über das Mikrofon per Sprache gesteuert werden. Dabei sind alle oben beschriebenen Funktionen des Betriebsprogramms des PEDs 40 mittels einer Sprachsteuerung bedienbar.

Über die Kommunikationseinheit 16 der Flugzeugvorrichtung 10 können sowohl Informationen von der Steuer- und Regeleinheit 46 des Kommunikationsmoduls 12 als auch Informationen von der Steuer- und Regeleinheit 38 der Fluggastsitzeinheit 18 an das Betriebssystem übertragen werden. Dabei können vor einem Flug Sicherheitshinweise automatisch von dem Betriebsprogramm des PEDs 40 wiedergegeben werden. Beispielsweise können auch aktuelle Flugdaten sowie Informationen aus dem Cockpit an das Betriebsprogramm des PEDs 40 übermittelt und auf diesem angezeigt werden. In einem Notfallbetriebsmodus ist es über die Kommunikationseinheit 16 möglich, dem Betriebsprogramm des PEDs 40 den Befehl zu geben, alle Kommunikationsmodule des PEDs 40 zu beenden und das PED 40 in einen Flugzeugmodus zu schalten.

Das System umfasst ein weiteres PED 62. Das PED 62 ist ebenfalls als ein Smartphone ausgebildet. Das weitere PED 62 ist dazu vorgesehen, von einem Personal für eine Maintenance-Funktion genutzt zu werden. Das PED 62 weist ebenfalls ein Betriebsprogramm auf, welches sich von dem für Passagiere vorgesehenen Betriebsprogramm des PEDs 40 unterscheidet. Das Betriebsprogramm des PEDs 62 weist eine Maintenance-Funktion auf. Die Maintenance-Funktion ist dazu vorgesehen, verschiedene maintenance-relevante Parameter aus der Fluggastsitzeinheit 18, 20, 22 auszulesen. Im Unterschied zu dem Betriebsprogramm des PEDs 40 muss das Betriebsprogramm des PEDs 62, welches die Maintenance-Funktion aufweist, nicht separat mit jeder einzelnen Fluggastsitzeinheit 18, 20, 22 gekoppelt werden. Das PED 62 wird über das Kommunikationsmodul 12 der Flugzeugvorrichtung 10 drahtlos mit der Flugzeugvorrichtung 10 verbunden. Über das Kommunikationsmodul 12 kann das Betriebsprogramm des PEDs 62 unmittelbar mit jeder mit dem Kommunikationsmodul 12 verbundenen Fluggastsitzeinheit 18, 20, 22 verbunden werden. Dabei ist kein Pairingvorgang nötig, um das Betriebsprogramm des PEDs 62 mit einer Fluggastsitzeinheit 18, 20, 22 direkt zu verbinden und mit der entsprechenden Steuer- und Regeleinheit 38 zu kommunizieren. Zur Auswahl einer der Fluggastsitzeinheiten 18, 20, 22 weist das Betriebsprogramm des PEDs 62 eine Auswahl-Bedienoberfläche auf, über die jede der Fluggastsitzeinheiten 18, 20, 22 separat ausgewählt werden kann. Die Auswahl-Bedienoberfläche kann dabei eine grafische Darstellung aller in der Flugzeugkabine aufgeständerten Fluggastsitzeinheiten 18, 20, 22 umfassen, bei der durch Klicken eines entsprechenden Bereichs eine entsprechende Fluggastsitzeinheit 18, 20, 22 auswählbar ist. Grundsätzlich ist es auch denkbar, dass die Auswahl-Bedienoberfläche beispielsweise je Fluggastsitzeinheit 18, 20, 22 je ein Auswahlfeld mit den entsprechenden Sitznummern aufweist. Ist mittels der Auswahl-Bedienoberfläche eine entsprechende Fluggastsitzeinheit 18, 20, 22 ausgewählt, ist das Betriebsprogramm des PEDs 62 mit seiner Maintenance-Funktion dazu vorgesehen, maintenance-relevante Parameter aus der Fluggastsitzeinheit 18, 20, 22 auszulesen und diese auf dem PED 62 darzustellen. Zur Darstellung der verschiedenen maintenance-relevanten Parameter aus der entsprechenden ausgewählten Fluggastsitzeinheit 18, 20, 22 weist das Betriebsprogramm des PEDs 62 verschiedene Unter-Bedienoberflächen auf, in denen jeweils funktionell gruppiert die unterschiedlichen maintenance-relevanten Parameter angezeigt werden. Maintenance-relevante Parameter sind dabei beispielsweise Seriennummern der verschiedenen Bauteile der entsprechenden Fluggastsitzeinheit 18, 20, 22, verschiedene Kontrollintervalle oder ein aktueller Status der verschiedenen Module 26, 28, 32 der Fluggastsitzeinheit 18, 20, 22.

Die Betriebsprogramme der beiden PEDs 40, 62 unterscheiden sich voneinander. Das Betriebsprogramm des PEDs 40 ist für den Gebrauch durch einen Passagier vorgesehen. Dabei ist das Betriebsprogramm als ein Betriebsprogramm einer Airline ausgebildet, bei der das entsprechende erfindungsgemäße System eingesetzt wird. Dabei ist es denkbar, dass das Betriebsprogramm lediglich ein Teil eines größeren, von der Airline bereitgestellten umfassenderen Betriebsprogramms ist. Das Betriebsprogramm des PEDs 62 ist lediglich für autorisierte Personen, insbesondere Personal für eine Maintenance einer Flugzeugkabine, vorgesehen. Das Betriebsprogramm des PEDs 62, insbesondere die Maintenance-Funktion, ist nicht zur Benutzung durch einen Passagier vorgesehen.

### Bezugszeichen

- 10: Flugzeugvorrichtung
- 12: Kommunikationsmodul
- 14: Verkabelung
- 16: Kommunikationseinheit
- 18: Fluggastsitzeinheit
- 20: Fluggastsitzeinheit
- 22: Fluggastsitzeinheit
- 24: Fluggastsitz
- 26: Aktuatormodul
- 28: Lichtmodul
- 30: Shellmodul
- 32: Entertainmentmodul
- 34: Anzeigeelement
- 36: Eingabeelement
- 38: Steuer- und Regeleinheit
- 40: PED
- 42: Bedienelement
- 44: Touchscreenelement
- 46: Steuer- und Regeleinheit
- 48: IFE-Steuer- und Regeleinheit
- 50: Bediencluster
- 52: Bediencluster
- 54: Bediencluster
- 56: Bediencluster
- 58: Favoriten-Bediencluster
- 60: Bedienmodul
- 62: PED

## Patentansprüche

1. System aus einem PED (40, 62), auf dem wenigstens ein Betriebsprogramm hinterlegt ist, welches für den Gebrauch durch einen Passagier vorgesehen ist, und einer Flugzeugvorrichtung (10), die wenigstens eine Steuer- und/oder Regeleinheit (38) umfasst, die zur Steuerung einer Fluggastsitzeinheit (18, 20, 22) vorgesehen ist, wobei die Steuer- und/oder Regeleinheit (38) dazu vorgesehen ist, Steuersignale von dem PED (40) zur Steuerung der Fluggastsitzeinheit (18, 20, 22) zu empfangen, **dadurch gekennzeichnet, dass** die Fluggastsitzeinheit (18, 20, 22) ein Bedienmodul (60) umfasst, das dazu vorgesehen ist, Steuersignale an die Steuer- und/oder Regeleinheit (38) auszugeben, wobei die Steuersignale des Bedienmoduls (60) Steuersignale eines mit der Fluggastsitzeinheit (18, 20, 22) gekoppelten PEDs (40) überschreiben, wobei das Bedienmodul (60) ein Hauptbedienelement der Fluggastsitzeinheit (18, 20, 22) darstellt und von der Steuer- und Regeleinheit (38) als dominant gegenüber dem Betriebsprogramm des PEDs (40) eingestuft wird, das ein sekundäres Bedienelement darstellt.

2. System nach Anspruch 1, **dadurch gekennzeichnet, dass** die Flugzeugvorrichtung (10) wenigstens ein Kommunikationsmodul (12) umfasst, über das das PED (40, 62) mit der Flugzeugvorrichtung (10) drahtlos koppelbar ist.

3. System nach einem der vorhergehenden Ansprüche, **dadurch gekennzeichnet, dass** über das Kommunikationsmodul (12) mehrere PEDs (40, 62) drahtlos mit der Flugzeugvorrichtung (10) gekoppelt werden können, um unterschiedliche Fluggastsitzeinheiten (18, 20, 22) anzusteuern.

4. System nach einem der vorhergehenden Ansprüche, **dadurch gekennzeichnet, dass** das Betriebsprogramm des PEDs (40) dazu vorgesehen ist, über das Kommunikationsmodul (12) mit lediglich einer der Fluggastsitzeinheiten (18, 20, 22) zu kommunizieren.

5. System nach einem der vorhergehenden Ansprüche, **dadurch gekennzeichnet, dass** das Betriebsprogramm des PEDs (40) dazu vorgesehen ist, durch einen Pairingvorgang eindeutig einer einzelnen Fluggastsitzeinheit (18, 20, 22) zugeordnet zu werden.

6. System nach Anspruch 5, **dadurch gekennzeichnet, dass** das PED (40) bei dem Pairingvorgang dazu vorgesehen ist, einen durch die Fluggastsitzeinheit (18, 20, 22) bereitgestellten Pairingcode zu verarbeiten und ein entsprechendes Signal an das Kommunikationsmodul (12) der Flugzeugvorrichtung (10) abzugeben.

7. System nach Anspruch 6, **gekennzeichnet durch** wenigstens eine Fluggastsitzeinheit (18, 20, 22), die wenigstens ein Anzeigeelement (34) aufweist, das dazu vorgesehen ist, den Pairingcode für den Pairingvorgang bereitzustellen.

8. System nach Anspruch 6 oder 7, **dadurch gekennzeichnet, dass** der Pairingcode zumindest einen Parameter umfasst, der für eine Identifizierung der entsprechenden Fluggastsitzeinheit (18, 20, 22) vorgesehen ist.

9. System zumindest nach Anspruch 6 oder 7, **dadurch gekennzeichnet, dass** der Pairingcode zumindest einen weiteren Parameter umfasst, der dazu vorgesehen ist, eine Ausstattung der Fluggastsitzeinheit (18, 20, 22) wiederzugeben.

10. System zumindest nach Anspruch 7, **dadurch gekennzeichnet, dass** die Fluggastsitzeinheit (18, 20, 22) wenigstens ein Bedienelement (42) umfasst, das zur Erzeugung des Pairingcodes betätigt werden muss.

11. System zumindest nach Anspruch 5, **dadurch gekennzeichnet, dass** das PED (40) und/oder die Flugzeugvorrichtung (10) dazu vorgesehen ist, zwischen dem PED (40) und der einen zu bedienenden Fluggastsitzeinheit (18, 20, 22) eine verschlüsselte Verbindung herzustellen.

12. System nach einem der vorhergehenden Ansprüche, **dadurch gekennzeichnet, dass** das Betriebsprogramm des PEDs (40) wenigstens dazu vorgesehen ist, eine Sitzpositionskontrolleinheit der entsprechenden Fluggastsitzeinheit (18, 20, 22) anzusteuern.

13. System nach einem der vorhergehenden Ansprüche, **dadurch gekennzeichnet, dass** das Betriebsprogramm des PEDs (40) wenigstens ein Bediencluster (50, 52, 54, 56, 58) bereitstellt.

14. System nach einem der vorhergehenden Ansprüche, **dadurch gekennzeichnet, dass** das wenigstens eine Bediencluster (50, 52, 54, 56, 58) mehrere Betriebsparameter der Fluggastsitzeinheit (18, 20, 22) umfasst.

15. System nach einem der vorhergehenden Ansprüche, **dadurch gekennzeichnet, dass** das Betriebsprogramm des PEDs (40) dazu vorgesehen ist, favorisierte Einstellungen eines Benutzers für eine Fluggastsitzeinheit (18, 20, 22) zu hinterlegen.

16. Verwendung eines Systems nach einem der Ansprüche 1 bis 15 zur Steuerung einer Fluggastsitzeinheit.

## Claims

1. System, composed
of a PED (40, 62) on which at least one operation programme is memorized, which is configured to be used by a passenger, and
of an aircraft device (10) comprising at least one control and/or regulation unit (38), which is configured for controlling an aircraft passenger seat unit (18, 20, 22), the control and/or regulation unit (38) being configured to receive control signals from the PED (40) for controlling the aircraft passenger seat unit (18, 20, 22),
**characterised in that** the aircraft passenger seat unit (18, 20, 22) comprises an operating module (60), which is configured for outputting control signals to the control and/or regulation unit (38),
wherein the control signals of the operating module (60) override control signals of a PED (40) that is coupled with the aircraft passenger seat unit (18, 20, 22), wherein the operating module (60) is classified by the control and/or regulation unit (38) as dominant relative to the operation programme of the PED (40), which is a secondary operating element.

2. System according to claim 1,
**characterised in that** the aircraft device (10) comprises at least one communication module (12), via which the PED (40, 62) is wirelessly couplable with the aircraft device (10).

3. System according to one of the preceding claims,
**characterised in that** a plurality of PEDs (40, 62) are wirelessly couplable with the aircraft device (10) via the communication module (12) for the purpose of actuating different aircraft passenger seat units (18, 20, 22).

4. System according to one of the preceding claims,
**characterised in that** the operation programme of the PED (40) is configured to communicate with only one of the aircraft passenger seat units (18, 20, 22) via the communication module (12).

5. System according to one of the preceding claims,
**characterised in that** the operation programme of the PED (40) is configured to be unambiguously allocated to one single aircraft passenger seat unit (18, 20, 22) by a pairing process.

6. System according to claim 5,
**characterised in that** the PED (40) is configured, in the pairing process, to process a pairing code provided by the aircraft passenger seat unit (18, 20, 22) and to output a corresponding signal to the communication module (12) of the aircraft device (10).

7. System according to claim 6,
**characterised by** at least one aircraft passenger seat unit (18, 20, 22) comprising at least one display element (34), which is configured to provide the pairing code for the pairing process.

8. System according to claim 6 or 7,
**characterised in that** the pairing code comprises at least one parameter which is configured for an identification of the respective aircraft passenger seat unit (18, 20, 22).

9. System at least according to claim 6 or 7,
**characterised in that** the pairing code comprises at least one further parameter, which is configured to show an equipment of the aircraft passenger seat unit (18, 20, 22).

10. System at least according to claim 7,
**characterised in that** the aircraft passenger seat unit (18, 20, 22) comprises at least one operating element (42), which must be operated for creating the pairing code.

11. System at least according to claim 5,
**characterised in that** the PED (40) and/or the aircraft device (10) are/is configured to establish an encoded connection between the PED (40) and the one aircraft passenger seat unit (18, 20, 22) that is to be operated.

12. System according to one of the preceding claims,
**characterised in that** the operation programme of the PED (40) is at least configured for actuating a seat position checking unit of the respective aircraft passenger seat unit (18, 20, 22).

13. System according to one of the preceding claims,
**characterised in that** the operation programme of the PED (40) provides at least one operating cluster (50, 52, 54, 56, 58).

14. System according to one of the preceding claims,
**characterised in that** the at least one operating cluster (50, 52, 54, 56, 58) comprises a plurality of operation parameters of the aircraft passenger seat unit (18, 20, 22).

15. System according to one of the preceding claims,
**characterised in that** the operation programme of the PED (40) is configured to memorize a user's favourite settings for an aircraft passenger seat unit (18, 20, 22).

16. Utilization of a system according to one of claims 1 to 15 for controlling an aircraft passenger seat unit.

## Revendications

1. Système, composé
d'un PED (40, 62), sur lequel au moins un programme opérationnel est mémorisé qui est prévu pour l'usage par un passager, et
d'un dispositif d'aéronef (10) comprenant au moins une unité de commande et/ou régulation (38) qui est prévue pour commander une unité de siège passager d'aéronef (18, 20, 22),
l'unité de commande et/ou régulation (38) étant prévue à recevoir des signaux de commande du PED (40) pour commander l'unité de siège passager d'aéronef (18, 20, 22),
**caractérisé en ce que** l'unité de siège passager d'aéronef (18, 20, 22) comporte un module opérateur (60) qui est prévu à émettre des signaux de commande à l'unité de commande et/ou régulation (38), où les signaux de commande du module opérateur (60) remplacent des signaux de commande d'un PED (40) couplé avec l'unité de siège passager d'aéronef (18, 20, 22), le module opérateur (60) constituant un élément opératif principal de l'unité de siège passager d'aéronef (18, 20, 22) et étant classé comme par l'unité de commande et/ou régulation (38) dominant par rapport au programme opérationnel du PED (40), qui constitue un élément opératif secondaire.

2. Système selon la revendication 1,
**caractérisé en ce que** le dispositif d'aéronef (10) comporte au moins un module de communication (12), par le biais duquel le PED (40, 62) peut être couplé sans fil avec le dispositif d'aéronef (10).

3. Système selon l'une quelconque des revendications précédentes,
**caractérisé en ce qu'**il est possible que par le biais du module de communication (12) plusieurs PEDs (40, 62) soient couplés sans fil avec le dispositif d'aéronef (10) pour un actionnement d'unités de siège passager d'aéronef (18, 20, 22) différentes.

4. Système selon l'une quelconque des revendications précédentes,
**caractérisé en ce que** le programme opérationnel du PED (40) est prévu pour communiquer avec seulement l'une des unités de siège passager d'aéronef (18, 20, 22) via le module de communication (12).

5. Système selon l'une quelconque des revendications précédentes,
**caractérisé en ce que** le programme opérationnel du PED (40) est prévu à être attribué sans équivoque à une seule unité de siège passager d'aéronef (18, 20, 22) par un procès de pairage.

6. Système selon la revendication 5,
**caractérisé en ce que** dans le procès du pairage le PED (40) est prévu à traiter un code de pairage fourni par l'unité de siège passager d'aéronef (18, 20, 22) et à émettre un signal correspondant au module de communication (12) du dispositif d'aéronef (10).

7. Système selon la revendication 6,
**caractérisé par** au moins une unité de siège passager d'aéronef (18, 20, 22) comportant au moins un élément d'affiche (34) qui est prévu à fournir le code de pairage pour le procès de pairage.

8. Système n selon la revendication 6 ou 7,
**caractérisé en ce que** le code de pairage comprend au moins un paramètre qui est prévu pour une identification de l'unité de siège passager d'aéronef (18, 20, 22) correspondante.

9. Système au moins selon la revendication 6 ou 7,
**caractérisé en ce que** le code de pairage comprend au moins un paramètre de plus, qui est prévu pour rendre un équipement de l'unité de siège passager d'aéronef (18, 20, 22).

10. Système au moins selon la revendication 7,
**caractérisé en ce que** l'unité de siège passager d'aéronef (18, 20, 22) comprend au moins un élément opératif (42), qui doit être opéré pour générer le code de pairage.

11. Système au moins selon la revendication 5,
**caractérisé en ce que** le PED (40) et/ou le dispositif d'aéronef (10) sont/est prévus/prévu à générer une liaison encodée entre le PED (40) et l'une unité de siège passager d'aéronef (18, 20, 22) qui est à manier.

12. Système selon l'une quelconque des revendications précédentes,
**caractérisé en ce que** le programme opérationnel du PED (40) est au moins prévu pour actionner une unité contrôlant de position de siège de l'unité de siège passager d'aéronef (18, 20, 22) correspondante.

13. Système selon l'une quelconque des revendications précédentes,
**caractérisé en ce que** le programme opérationnel du PED (40) fourni au moins un cluster opératif (50, 52, 54, 56, 58).

14. Système selon l'une quelconque des revendications précédentes,
**caractérisé en ce que** l'au moins un cluster opératif (50, 52, 54, 56, 58) comprend plusieurs paramètres opératifs de l'unité de siège passager d'aéronef (18, 20, 22).

15. Système selon l'une quelconque des revendications précédentes,
**caractérisé en ce que** le programme opérationnel du PED (40) est prévu à mémoriser des réglages favorisés d'un utilisateur pour une unité de siège passager d'aéronef (18, 20, 22).

16. Utilisation d'un système selon l'une des revendications 1 à 15 pour la commande d'une unité de siège passager d'aéronef.
